# EUROPEAN PATENT SPECIFICATION

(11) **EP 1 347 107 B1**
(45) Date of publication and mention of the grant of the patent: **20.10.2004**
(21) Application number: 01998699.1
(22) Date of filing: 27.11.2001
(51) Int. Cl.: E04B 1/62, E04B 1/74, E04B 1/94, C08L 23/04, C08L 35/02, C09D 5/34, C09D 133/10, C09D 135/08, C09J 133/08, C09J 135/08, C09K 3/10

(54) **POLYVALENT, INSULATING, ANTI-VIBRATORY, ADHESIVE AND FIREPROOF PRODUCT FOR VARIOUS INDUSTRIAL SECTORS, ESPECIALLY THE BUILDING INDUSTRY**
MEHRZWECKPRODUKT ZUM ISOLIEREN, SCHWINGUNGSDÄMPFEN, KLEBEN UND BRANDSCHUTZ IN VERSCHIEDENEN TECHNISCHEN GEBIETEN, INSBESONDERE IN DER BAUINDUSTRIE
PRODUIT POLYVALENT, ISOLANT, ANTIVIBRATIONS, ADHESIF ET RESISTANT AU FEU, DESTINE A DIFFERENTS SECTEURS INDUSTRIELS, NOTAMMENT A LA CONSTRUCTION

(30) Priority: 28.11.2000 ES 200002848
(43) Date of publication of application: 24.09.2003
(73) Proprietor: Intecvibo Servicios S.L., 41927 Mairena de Aljarafe (Sevilla) (ES)
(72) Inventor: BONACINI, Vittorio, E-41927 Mairena de Aljarafe (ES)
(74) Representative: Gonzalez Sanchez, German
(86) International application number: PCT/ES2001/000459
(87) International publication number: WO 2002/044490

(56) References cited:
- ES-A- 2 151 796
- ES-A- 2 155 321
- ES-T- 2 142 584
- JP-A- 53 024 331
- JP-A- 62 191 482
- US-A- 4 876 142

## Description

### OBJECT OFTHE INVENTION

The present invention refers to an initially pasty or semi-dense product, which, once applied and dry, has a multi-purpose nature, being suitable for use as heat and sound insulation, as weatherproofing, as a flexible vibration-absorbing element, as a sealant and dampproofing medium, as an adhesive and a fire protection material.

More specifically, the product being advocated, which may be applied with a brush, with a trowel, by pouring or by spraying with any type of suitable machine, can in turn be used in a number of different industrial sectors and particularly in the building trade, for instance for weatberproofing and sealing all kinds of roofs and balconies, as a decorative facing, as a dampproofing lining, as a heat and/or sound insulation cladding, as a structure fire protection covering, as a sealant coating for water tanks, cisterns, ponds, swimming pools, fountains, tunnels, etc., as a coating for flat or corrugated metal or asbestos cement sheets or sandwich panels for roofing or facades, for sealing cracks or crevices and expansion joints, for encapsulating asbestos cement sheets, for protective damp and efflorescence inhibiting linings; as an element absorbing noise, vibrations in general and in particular in metal structures, motor vehicles and means of transport (in replacement, for example, of the pitch used at present), as a rust preventer on metal structures, as a general purpose adhesive for solid materials (iron to iron, glass to glass or iron, brick to brick, brick to reinforced concrete or to iron and all sorts of combinations, etc.), to protect old facades from natural agents and modem ones and monuments as a graffitti preventer; as a backing material coating for making carpeting, matting or wallpaper, as a wall covering; for primary thermal and acoustic insulation and for sealing materials and/or panels made of wood, hardboard, iron, glass, plastic, plasterboard, plaster, etc.; as interior sandwich panel heat and sound insulation material, for compacting, bonding and conferring elasticity on such loose materials as sand, earth, stones, etc., for treating and sealing cracks and crevices, as a coating and sealant for gutters, conduits and piping in general, etc.

### PRIOR ART

In all sectors of construction and industry there is a series of needs, such as for heat and/or sound insulation, sealing, lining facades, ceilings, walls and roofs with a transparent flexible material; protecting both old and new facades and monuments from atmospheric and natural agents; for dampproofing and preventing filtrations or efflorescence of salts, protecting against fungi and other microorganisms, and all this with products offering long-term stability, that are not hazardous or toxic either during application or afterwards, fire-resistant, single-component and, what is more, environment friendly.

At the present time there is in practice a very wide range of products that are able to supply one or more of the afore-mentioned features, but there is no general-purpose product that is able to provide them all together.

More specifically, the Spanish patent with publication number 2.155.321 describes a sealing paste for building which comprises an acrylic resin, polyvinyl acetate, vegetable fat, water, cork powder, sodium hydroxide and a pigment, sealing paste theoretically provided with insulating, sealing and fire-resisting properties, and which may be used as a joint paste for bonding building elements.

In this patent, however, both the components taking part in its formulation and the conditions in which the mixing is performed mean that the end product does not have the due homogeneity, because of a considerable difference in the density of the components, resulting in the formation of lumps of a plastic consistency, which make this paste hard to handle and impossible to spray, while it also adheres with great difficulty to such surfaces as bricks, sheets, etc.

It is therefore a product of little or no consistency for possible use or application as a sealing paste, despite the fact that this is the objective that is sought to be achieved with it.

### DESCRIPTION OF THE INVENTION

The multi-purpose product proposed by the invention possesses all the features described above, so that it is of a versatile nature, which enables it to be used in any of the afore-mentioned cases.

For this purpose this product is composed of a combination of acrylic resin, polyvinyl acetate, vegetable oil, water, cork particles, sodium hydroxide, pigment and cellulose glue, products readily obtainable on the market and which by means of variations in the proportion used with each one of them enable finished products to be obtained with different characteristics, suitable in each case to the type of problem to be solved.

More specifically, the participation of the aforesaid components in the product, in accordance with weight percentages in respect of the total, is as follows:
- Acrylic resin: 10% - 49%
- Polyvinyl acetate: 20% - 28%
- Vegetable oil: 1% - 8%
- Water: 10% - 20%
- Cork particles: 8% - 12%
- Sodium hydroxide: 1% 4%
- Pigment: 0% - 58%
- Cellulose glue: 0% - 5%

As may be seen from this list of components, the multi-purpose product being advocated mainly focuses its characteristics around a marked increase in the amount of water compared with the aforesaid patent 2.155.321, which goes from being between 3.2 - 6.7% to 10 - 20%, a considerable increase in the quantity of cork too, which rises from being 2.02 - 2.08% to 8 - 12%, besides the addition of a new component, specifically cellulose glue, all of which means that the multi-purpose product of the invention has a much more homogeneous mixture, far easier to handle and to spray, of a consistent texture, which may be applied perfectly as a coating since it adheres readily to any type of backing and, furthermore, facilitates the formation of smooth layers.

### PREFERRED EMBODIMENT OF THE INVENTION

In accordance with a preferred embodiment of the invention, the one which is normally used in the manufacture of plastic paints and which includes the polymers of the acrylic and methacrylic acids and their derivatives will be used as the acrylic resin. This component, the resin, assures the sealing, elasticity and adherence properties.

For its part, polyvinyl acetate is an amorphous homopolymer of vinyl acetate, usually used as "white glue" at general level for jobs connected with wood in industrial sectors and the building trade. This component, polyvinyl acetate, assures the fixing of the cork particles, acting as an adhesive or binder.

The vegetable oil may be of any type, sunflower, corn, etc., with an acidity between 0.2° - 0.4°. This component, the vegetable oil, acts as a waterproofer endows the product with malleability in general.

The pigment may also be of the liquid type normally used in traditional paints or may also be in powder (natural soils). In these cases the percentage drops to levels close on zero.

The particles of cork, this being the best natural thermal insulator, besides a good sound insulator and an excellent vibration absorber with latent adhesivity and optimal waterproofing, act as a thickener and binding agent for the other components, adding all their characteristics to the general product.

Water is the component that confers fluidity on the product, not letting it dry after packing and acting as an aqueous solution in an initial phase with the sodium hydroxide and in a second stage as a gel solution, a product of the combination of sodium hydroxide, water and vegetable oil. It acts at the same time as a general fluidizer and it is the only component that may be added at the time of application to achieve the necessary density and fluidity for the different types of application chosen.

Along with certain components, specifically vegetable oil and water, mixed thoroughly, the sodium hydroxide supplies the product with the desired degree of density and viscosity and provides antifungal and long-keeping properties.

With a broad spectrum of participation, ranging from 0% to 58% by weight, as mentioned above, the pigment permits such high levels of participation inasmuch as, in the case of pigmented product, it may partly replace acrylic resin, since this is already included in the pigment. Depending on the tone of the colour, the percentage of pigment may reach the above-mentioned level of 58% for light-toned products and in itself supplies the necessary resin.

Being a powdered component, the cellulose glue is added to the aqueous sodium hydroxide and vegetable oil solution and constitutes a thickener that confers greater adhesive strength on the end product.

For the manufacture of the product, the following operational stages are foreseen:
- An aqueous solution of sodium hydroxide is prepared at an initial stage by adding vegetable oil in the scheduled proportions and mixing thoroughly so that the compound is fully homogenised. It is then left to stand for a few hours until the liquid compound turns into a dense viscous liquid compound.
- At a second operational stage the whole of the scheduled percentage of cellulose glue and water (approximately 15 litres of water for 2.5 Kg of gel + 0.5 Kg of cellulose glue) and it is stirred until an homogeneous, fluid, lump-free product is obtained. This new compound will be treated as just another component for the manufacture of the product
   . - At a third and final operational stage, polyvinyl acetate is added to the component of the previous phase in a rotary mixer (such as a concrete mixer for instance), the acrylic resin is added straightaway, mixing all the time, together with the pigment if the end product is coloured, and lastly the cork particles are added, mixing and homogenising all the components all the time in the mixer.

The end product, whether pigmented or not, is presented as a more or less dense mortar ready for packing in containers.

At the moment of application the product prepared as described above, depending on the types of application chosen (trowel, spraying, pouring, etc.) requires a mixing phase, for purposes of fresh homogenisation, and a little water may be added to obtain the right fluidity.

Once applied, it becomes a strong compact surface, with an advisable thickness per coat of 2.5 a 4 millimetres. For greater thickness it is best to apply a series of coats after letting the preceding one dry first.

The backings on which the product is to be applied may be smooth or rough and irregular, porous, such as concrete, brick, plaster, wood, etc., or non-porous, such as iron, glass, ceramic, plastic, etc., and the drying time will depend on the type and characteristics of the backing.

The product being advocated for its properties is aimed at all sectors of industry and the building trade, and more specifically, as already mentioned above, at the following:
- Weatherproofing of roofs, balconies, floorings.
- Moisture absorption in interior and exterior walls.
- Fire protection of structural and non-structural elemen ts.
- Protection against all kinds of damp (by capillarity, filtration, condensation, permeability, etc.).
- Sound insulation preventing transmission of impacts and reverberation.
- General-purpose sealant.
- General-purpose adhesive.
- Sealing of swimming pools, fountains, ponds, water tanks, tunnels.
- General-purpose vibration damper (means of transport, machinery, cars, trucks, trains, etc.).
- Rusting protection on iron structures.
- Resilient decorative covering for facades, ceilings and roofs.
- Protection of old facades, walls, churches, roofing,' monuments, etc. against deterioration (in this case the percentage of cork is zero).
- Sealing of visible facades (transparent cork-free product).
- Encapsulation of asbestos cement roofing.
- Heat insulation and sound insulation for rainwater impact, weatherproofing and sealant on galvanised or non-galvanised or pre-painted corrugated or smooth sheets or sandwich panels.
- On parquet; for sound insulation, sticking, heat insulation and sealing.
- Expansion joints (on account of its high elasticity).
- Protection against fungi and mould.
- Sealant for air-conditioning ducts.
- Cladding of iron and reinforced concrete beams and pillars.
- Protection of reinforced concrete.
- Cladding and rehabilitation of facades in general.
- Damper between iron pillar plates and the reinforced concrete base.
- Thermal insulation in air chambers.
- Weatherproofing and thermal insulation under roof tiles.
- Sealant for cracks, crevices and small and large-sized holes.
- Soundproofing lining and flooring in day nurseries, schools and sports and recreational facilities.
- Insulating element (heat and sound) in sandwich panels with outer sheets of any kind (iron, wood, hardboard, plasterboard, glass, plastic, etc.)
- Graffitti preventive for all surfaces needing protection.
- As a finish material on a backing, for carpeting, paper, matting, etc.

As stated above, the proportions referred to previously may be variable in accordance with the practical application planned for the product, and in this case, for illustrative purposes only, the following examples may be put forward:

| **Specimen composition (in the case of impregnating material without cork)** | |
|---|---|
| **Component** | **Weight percentage** |
| Acrylic resin | 49 % |
| Polyvinyl acetate | 28 % |
| Vegetable oil | 1.5% |
| Water | 20 % |
| Cork particles | 0 % |
| Sodium hydroxide | 1.5% |
| Pigment | 0 % |
| Cellulose glue | 0 % |

| **Specimen composition (in the case of dark-toned pigmente material)** | |
|---|---|
| **Component** | **Weight percentage** |
| Acrylic resin | 37 % |
| Polyvinyl acetate | 25 % |
| Vegetable oil | 1.5 % |
| Water | 17 % |
| Cork particles | 8 % |
| Sodium hydroxide | 1.5% |
| Pigment | 8 % |
| Cellulose glue | 2 % |

| **Specimen composition (in the case of light-toned pigmented material)** | |
|---|---|
| **Component** | **Weight percentage** |
| Acrylic resin | 10 % |
| Polyvinyl acetate | 25 % |
| Vegetable oil | 1.5% |
| Water | 17 % |
| Cork particles | 8 % |
| Sodium hydroxide | 1.5% |
| Pigment | 35 % |
| Cellulose glue | 2 % |

| **Specimen composition (in the case of natural cork-coloured material)** | |
|---|---|
| **Component** | **Weight percentage** |
| Acrylic resin | 49 % |
| Polyvinyl acetate | 21 % |
| Vegetable oil | 2 % |
| Water | 17 % |
| Cork particles | 8 % |
| Sodium hydroxide | 1.5% |
| Pigment | 0 % |
| Cellulose glue | 1,5 % |

## Claims

1. Multi-purpose, insulating, vibration-damping, adhesive and fire resistant product for a wide range of industrial sectors, especially for the building trade, which, being apt for use for, cladding facades, preventing graffitti, weatherproofing roofs, sound and/or thermal insulation in general and on metal sheets, proofing against damp and efflorescence of salts, absorbing vibration in vehicles or means of transport in general and stationary and moving machinery, encapsulating for asbestos cement sheeting, protecting structures and elements against fire, a means of coating backings for making carpeting and the like, preventing filtration, elasticizing and binding loose carrier materials, lining gutters, conduits and piping, adhesive for all kinds of solid materials, expansion joints and any other purpose in which the above-described features are required, is **characterised in that** in its formulation acrylic resin, polyvinyl acetate, vegetable oil, water, particles of cork, sodium hydroxide, pigment and cellulose glue are present in the following weight percentages:
- Acrylic resin: 10% - 49%
- Polyvinyl acetate: 20% - 28%
- Vegetable oil: 1% - 8%
- Water: 10% - 20%
- Cork particles: 8% - 12%
- Sodium hydroxide: 1% - 4%
- Pigment: 0% - 58%
- Cellulose glue: 0% - 5%

2. Method of manufacture of the product of the previous claim, **characterised in that** it comprises the following operational phases:
- Preparation of an aqueous solution with sodium hydroxide by adding vegetable oil, mixing until it is fully homogenised and letting it stand for a few hours until the liquid compound turns into a dense viscous gel.
- Addition of cellulose glue and water to the aforesaid gel and stirring until a homogeneous, fluid, lump-free product is obtained.
- Addition firstly of polyvinyl acetate to 'the fluid product of the previous phase in a rotary mixer, followed by the acrylic resin, then the pigment when the resultant product is to be coloured, and lastly of particles of cork, while stirring all the time until obtaining the end compound, presented as a more or less dense mortar, ready for packing in containers.

## Patentansprüche

1. Isolierendes, schwingungsdämpfendes, klebendes und feuerbeständiges Mehrzweckprodukt für diverse Industriebereiche, insbesondere den Bausektor, verwendbar als Fassadenbeschichtung, Antigraffitti-Beschichtung, Dachabdichtungen, thermische und akustische Isolierungen allgemein und auf metallischen Blechen, Feuchtigkeits- und Salzsperre, zur Schwingungsdämpfung in Fahrzeugen oder Transportmitteln allgemein sowie ortsfeste und bewegliche Maschinen, Umhüllungsmittel für Asbestzementplatten, Schutz von Strukturen und Elementen gegen Feuer, Beschichtungsmittel für Unterlagen zur Herstellung von Auslegware und ähnlichem, Filtrationssperre, Weichmacher und Kleber für lose Träger, Beschichtung von Kanälen, Leitungen und Rohren, Kleber für Feststoffe aller Art, Dehnungsfugen und sonstige Fälle, in denen die genannten Eigenschaften gefordert werden, **dadurch gekennzeichnet dass** in diesem als Bestandteile Akrylharz, Polyvinylazetat, Pflanzenöl, Wasser, Korkpartikel, Natriumhydroxid, Pigmente und Zelluloseleim in folgenden Gewichtsprozentanteilen verwendet werden:
- Akrylharz: von 10% bis 49%
- Polyvinylazetat: von 20% bis 28%
- Pflanzenöl: von 1 % bis 8%
- Wasser: von 10% bis 20%
- Korkpartikel: von 8% bis 12%
- Natriumhydroxid: von 1 % bis 4%
- Pigmente: von 0% bis 58%
- Zelluloseleim: von 0% bis 5%

2. Verfahren zur Herstellung des Produkts gemäß dem vorhergehenden Anspruch, **dadurch gekennzeichnet dass** in diesem folgende Phasen vorgesehen sind:
- Zubereitung einer wässrigen Natriumhydroxid-Lösung unter Zusatz von Pflanzenöl, Mischung bis zur Homogenisierung der Komponenten und Abstehen während einiger Stunden bis zur Umwandlung der Mischung in ein dickes, viskoses Gel,
- Zugabe des genannten Gels zu dem Zelluloseleim und dem Wasser bis zum Erreichen einer flüssigen, homogenen und klumpenfreien Mischung,
- Zugabe des flüssigen Produkts aus der vorhergehenden Phase zu dem Polyvinylazetat in ein Rührwerk, danach Zugabe des Akrylharzes und anschließend der Pigmente, falls eine Einfärbung des resultierenden Produkts vorgesehen ist, und schließlich Zugabe der Korkpartikel unter ständigem Rühren bis zum Erreichen der endgültigen Mischung in Form eines mehr oder weniger dicken zur Abfüllung in Behälter geeigneten Mörtels.

## Revendications

1. Produit polyvalent, isolant, antivibratoire, adhésif et résistant au feu pour divers secteurs industriels, spécialement pour la construction, utilisé comme recouvrement de façades, anti-graffitis, imperméabilisation de toits, isolements thermiques et/ou acoustiques en général et appliqué sur des tôles métalliques, servant de protection contre l'humidité et contre le salpêtre, d'amortisseur de vibration dans les voitures ou dans les modes de transports en général et machinerie fixe ou mobile, encapsuleur pour tôles de ciment d'amiante, protecteur de structures, d'éléments contre le feu, mode de recouvrement de supports pour fabrication de moquette ou semblable, blocage de filtrations, élastifiant et agglutinant de supports détachés, recouvrement de canalisations, conduits et tuyauteries, adhésif pour tout type de matériaux solides, joint de dilation et tout type de supports pour lesquels les caractéristiques mentionnées sont exigées, se **caractérise par** l'ensemble de ses composantes tels que résine acrylique, acétate de polyvinyle, huile végétale, eau, particules de liège, hydroxyde de sodium, pigment et colle cellulosique, suivant les proportions de poids suivants :
- Résine acrylique : entre 10% et 49%
- Acétate de polyvinyle : entre 20% et 28%
- Huile végétale : entre 1% et 8%
- Eau: entre 10% et 20%
- Particules de liège : entre 8% et 12%
- Hydroxyde de sodium : entre 1 % et 4%
- Pigment : entre 0% et 58%
- Colle cellulosique : entre 0% et 5%

2. ^{a}.- Mode de fabrication du produit de la revendication précédente, **caractérisé par** les phases opérationnelles suivantes:
- Préparation d'une solution aqueuse avec hydroxyde de sodium, ajoutant de l'huile végétale, mélangeant jusqu'à homogénéisation du composé et repos pendant quelques heures jusqu'à la transformation du composé liquide en un gel dense et visqueux.
- Addition à ce gel, de la colle cellulosique et de l'eau et remuage jusqu'à obtention d'un produit fluide et homogène sans grumeaux.
- Addition au produit fluide de la phase précédente, de l'acétate de polyvinyle dans un mélangeur rotatif, suivi de la résine acrylique, de pigment lorsqu'une coloration du produit final est prévue, et finalement l'addition du liège en particules, maintenant le remuage continu jusqu'à l'obtention du composé final, présenté comme du mortier plus ou moins dense, prêt pour l'emballage dans des containers.
